# EUROPÄISCHE PATENTSCHRIFT

(11) **EP 2 951 088 B1**
(45) Veröffentlichungstag und Bekanntmachung des Hinweises auf die Patenterteilung: **01.11.2017**
(21) Anmeldenummer: 14706275.6
(22) Anmeldetag: 28.01.2014
(51) Int. Cl.: B64D 11/00

(54) **ÜBERKOPF-GEPÄCKFACH FÜR FLUGZEUGE**
OVERHEAD LUGGAGE BIN FOR AIRCRAFT
CASIER À BAGAGE POUR AVIONS

(30) Priorität: 01.02.2013 AT 500782013
(43) Veröffentlichungstag der Anmeldung: 09.12.2015
(73) Patentinhaber: FACC AG, 4910 Ried im Innkreis (AT)
(72) Erfinder: KAMMERER, Bernhard, A-4755 Zell an der Pram (AT); SCHÖRKHUBER, Jakob, A-4682 Geboltskirchen (AT)
(74) Vertreter: Sonn & Partner Patentanwälte
(86) Internationale Anmeldenummer: PCT/AT2014/050031
(87) Internationale Veröffentlichungsnummer: WO 2014/117198

(56) Entgegenhaltungen:
- EP-A1- 0 718 189
- WO-A1-2010/145915
- US-A1- 2011 253 837
- US-A1- 2012 038 254

## Beschreibung

Die Erfindung betrifft Überkopf-Gepäckfächer für Flugzeuge mit einem fixen Gepäckfach mit einem feststehenden Gehäuse und einer verschwenkbaren Klappe und einem absenkbaren Gepäckfach mit einer absenkbaren Mulde,wobei das fixe Gepäckfach und das absenkbare Gepäckfach jeweils einen feststehenden Teil mit Seitenwänden und einen um eine Drehachse zwischen einer geschlossenen und einer geöffneten Position verschwenkbaren beweglichen Teil mit einem Verschlusselement zum Halten des beweglichen Teils in der geschlossenen Position aufweist, welche einen Gepäckaufnahmeraum definieren, wobei am feststehenden Teil Befestigungsvorrichtungen zur Befestigung an einer tragenden Struktur des Flugzeugs und zumindest eine Aufhängevorrichtung für eine Passagier-Serviceeinheit angeordnet ist, und wobei die Aufhängevorrichtung für die Passagierserviceeinheit im Bereich der Rückseite des feststehenden Teils angeordnet ist, sodass die Passagierserviceeinheit zwischen dem Gepäckfach und der Hülle des Flugzeugs anordenbar ist.

Weiters betrifft die Erfindung ein Flugzeug mit einem Gang und beiderseits des Ganges angeordneten Überkopf-Gepäckfächern der oben angegebenen Art.

Die vorliegende Erfindung bezieht sich hauptsächlich auf Gepäckablagen für Passagierflugzeuge. Eine Anwendung auch bei Schienenfahrzeugen oder anderen, zum Passagiertransport eingerichteten Transportmittel, beispielsweise Schiffen, ist jedoch auch denkbar.

Die Erfindung bezieht sich sowohl auf feststehende Gepäckfächer mit einem feststehenden Gehäuse und einer verschwenkbaren Klappe als auch auf absenkbare Gepäckfächer mit einer absenkbaren Schütte, welche meistens aus Verbundwerkstoffen aus faserverstärktem Kunststoff und einem Wabenkern in Leichtbauweise hergestellt sind.

Insbesondere bei Passagierflugzeugen mit nur einem Gang und beiderseits des Ganges angeordneten Sitzreihen und darüber angeordneten Überkopf-Gepäckfächern ist es schwierig, einen Kompromiss zwischen einem möglichst großen Gepäckaufnahmeraum in den Gepäckfächern und einer möglichst großen Kopffreiheit für die Passagiere zu finden. Abgesehen von den geforderten räumlichen Erfordernissen ist auch zunehmend auf die Ästhetik im Fahrgastraum des Flugzeuges und das Design Bedacht zu nehmen.

Darüber hinaus ist ein möglichst leichtes Umrüsten zwischen den festen Gepäckfächern, den sogenannten fixed bins, und den absenkbaren Gepäckfächern, den sogenannten moveable bins oder pivot bins, wünschenswert, um die Passagierflugzeuge rasch und einfach auf die gewünschte Konfiguration ändern zu können. Beispielsweise sind in der ersten Klasse oder Business-Klasse häufig absenkbare Gepäckfächer erwünscht, welche dem Passagier das Beladen und Entladen der Gepäckfächer erleichtern, jedoch durch einen komplexeren Aufbau gekennzeichnet sind. In der Economy Class hingegen werden häufig feste Gepäckfächer vorgesehen, die sich durch eine besonders robuste Bauweise und niedrigere Komplexität auszeichnen.

Die EP 0 718 189 A1 beschreibt Überkopf-Gepäckfächer für Flugzeuge, welche als fixes Gepäckfach mit einem feststehenden Gehäuse und einer verschwenkbaren Klappe oder als absenkbares Gepäckfach mit einer absenkbaren Mulde ausgebildet sein kann. Die Befestigung der Überkopf-Gepäckfächer an der Flugzeugstruktur erfolgt über ein zusätzliches Schienensystem, welches das Gesamtgewicht der Einrichtung erhöht.

Die US 5,716,027 offenbart ein feststehendes Gepäckfach mit hochschwenkbarer Klappe, welches in Flugzeugen nachgerüstet werden kann. Das Gepäckfach weist an den Seitenwänden bzw. an der Rückseite verschiedene Befestigungsmittel auf, welche für die Halterung des feststehenden Gepäckfachs ausgelegt sind. Darüber hinaus wird eine andersartige Ausführung von Gepäckfächern mit absenkbarem Gepäckfach beschrieben, bei welcher die Gepäckfächer an einer Mittelkonsole des mehrere Gänge aufweisenden Flugzeugs befestigt werden. Die Befestigungsstellen und damit die Krafteinleitung an der Mittelkonsole unterscheidet sich jedoch grundlegend von den gattungsgemäßen Gepäckfächern, welche am Flugzeugrumpf befestigt werden.

Aus den DE 10 2007 030 331 A1, DE 10 2009 051 362 A1, US 2006/0214055 A1, US 2011/253837 A1, US 2012/038254 A1, US 2012/0074258 A1 und WO 2010/145915 A1 sind weitere Gepäckfächer für Flugzeuge bekannt, wobei jedoch eine Austauschbarkeit zwischen den verschiedenen Bauweisen von Gepäckfächern, als feste bzw. absenkbare Gepäckfächer, nicht vorgesehen ist. Die verwendeten Befestigungs- bzw. Halteeinrichtungen wären dafür auch nicht eingerichtet.

Darüber hinaus beschreibt die DE 10 2009 014 573 A1 ein Gepäckfach für Flugzeuge, welches einfach zwischen einer festen und einer absenkbaren Bauweise umgerüstet werden kann. Nachteilig dabei ist jedoch, dass insbesondere bei den absenkbaren Gepäckfächern der Gepäckaufnahmeraum gegenüber den festen Gepäckfächern erheblich reduziert wird.

Andere absenkbare Gepäckfächer, wie z.B. die in der EP 1 436 194 B1 oder der EP 731 021 B1 beschriebenen, weisen zur Unterstützung des Öffnungs- und Schließvorgangs relativ komplexe Kraftunterstützungsmechanismen auf, durch die der Preis der Gepäckfächer erhöht wird, was beim Preisdruck, dem Luftlinien heutzutage unterliegen, absolut unerwünscht ist.

Zur Schaffung eines Schutzes vor Verletzungen durch freiliegende Bereiche des Schlosses bei einem Gepäckfach wurde bei der US 7,588,211 B2 vorgeschlagen, ein spezielles Abdeckelement auf die Klappe des Gepäckfaches aufzusetzen, das den Verriegelungsmechanismus bedeckt. Nachteilig dabei ist jedoch, dass durch diese zusätzlichen Elemente das Gewicht des Gepäckfachs erhöht wird.

Die Aufgabe der vorliegenden Erfindung besteht in der Schaffung von Überkopf-Gepäckfächern für Flugzeuge, welches einen möglichst großen Gepäckaufnahmeraum sowohl in der Ausgestaltung als festes Gepäckfach als auch in der Ausgestaltung als absenkbares Gepäckfach aufweisen, gleichzeitig jedoch möglichst geringes Eigengewicht besitzen. Die Gepäckfächer sollen möglichst einfach und kostengünstig herstellbar sein. Nachteile bekannter Überkopf-Gepäckfächer sollen vermieden oder zumindest reduziert werden.
Eine weitere Aufgabe der vorliegenden Erfindung besteht in der Schaffung eines Flugzeuges, insbesondere eines Flugzeuges mit einem Gang, welches möglichst rasch und einfach mit verschiedenen Überkopf-Gepäckfächern, d.h. fixen Gepäckfächern und/oder absenkbaren Gepäckfächern, ausgestattet und umgerüstet werden kann. Die Gepäckfächer sollen die Bewegungsfreiheit der Passagiere möglichst wenig einschränken und möglichst leicht beladbar und entladbar sein.

Gelöst wird die erste erfindungsgemäße Aufgabe durch ein oben genanntes Überkopf-Gepäckfach, bei dem zwei Befestigungsvorrichtungen an den Seitenwänden des feststehenden Teils zur Aufnahme von Kräften in seitlicher und vertikaler Richtung zur Fortbewegungsrichtung des Flugzeugs und zumindest eine weitere Befestigungsvorrichtung im Bereich der Unterseite der Rückseite des feststehenden Teils zur Aufnahme von Kräften in seitlicher Richtung zur Fortbewegungsrichtung des Flugzeugs und in Fortbewegungsrichtung des Flugzeugs angeordnet sind, wobei die Befestigungsvorrichtungen und die weitere Befestigungsvorrichtung für das fixe Gepäckfach und das absenkbare Gepäckfach an den selben Aufhänge- bzw. Befestigungspunkten angeordnet sind, und dass der Gepäckaufnahmeraum in geschlossener Position des beweglichen Teils eine durchgehende Tiefe von mindestens 61 cm und eine durchgehende Höhe von mindestens 36 cm und ein Volumen von min-destens 250 dm³ aufweist, sodass Gepäckstücke in einem hochkant liegenden Zustand angeordnet werden können.

Derartige Überkopf-Gepäckfächer, welche sowohl als fixes Gepäckfach als auch als absenkbares Gepäckfach ausgebildet sind, ermöglichen die Aufnahme von den meisten Handgepäckstücken in hochkant liegendem bzw. stehendem Zustand, wie es bei bisherigen Gepäckfächern nicht möglich ist. Durch eine hochkant liegende bzw. stehende Anordnung von Gepäckstücken, deren Dimensionen im Bereich der Normwerte der Handgepäckstücke (Maximalgröße der IATA, der International Air Transport Association: 25 × 45 × 56 cm) liegen, kann ein höheres Volumen an Handgepäck in die Gepäckfächer beladen werden. Darüber hinaus sind die Befestigungsvorrichtungen am feststehenden Teil des Überkopf-Gepäckfachs so konzipiert, dass eine besonders einfache und rasche Umrüstung zwischen feststehenden und absenkbaren Gepäckfächern je nach Wunsch des Flugzeugbetreibers erfolgen kann. Auch ist es möglich, ein Flugzeug für bestimmte Einsatzzeiten kurzfristig umzurüsten, beispielsweise die Anzahl an absenkbaren Gepäckfächern für die erste Klasse und die Business-Klasse kurzzeitig zu verändern. Es sind eine weitere Befestigungsvorrichtung zur Aufnahme von Kräften in X-Richtung, d.h. in Fortbewegungsrichtung des Flugzeuges sowie zwei Befestigungsvorrichtungen zur Aufnahme von Kräften in Y-Richtung, d.h. in Flügelrichtung des Flugzeuges, vorgesehen, welche durch entsprechende Elemente gebildet werden, die im Bereich der Unterseite der Rückseite des feststehenden Teils des Gepäckfachs befestigt werden. Zur Erzielung der gewünschten Kraftaufnahme ist es günstig, wenn zumindest eine weitere Befestigungsvorrichtung in der horizontalen Ebene (xy-Ebene) in einem Winkel, insbesondere in einem spitzen Winkel, zur x-Richtung (Flugrichtung) erstreckt ist. Darüber hinaus ist es günstig, wenn zumindest eine weitere Befestigungsvorrichtung in der horizontalen Ebene (xy-Ebene) in y-Richtung, d.h. in Längsrichtung der Flügel, erstreckt ist. Dadurch, dass im Gegensatz zu vielen Gepäckfächern des Standes der Technik die Passagier-Serviceeinheit nicht mehr an der Unterseite der Gepäckfächer sondern zwischen den Gepäckfächern und der Hülle des Flugzeugs angeordnet ist, kann der Umbau auch besonders rasch und einfach ohne Änderungen im elektrischen System oder im Lüftungssystem vorgenommen werden. Wichtig bei den erfindungsgemäßen Überkopf-Gepäckfächern ist, dass bei beiden Arten von Gepäckfächern (fixed bins und movable oder pivoted bins) dieselben Aufhänge- bzw. Befestigungspunkte vorgesehen sind und somit keine Änderungen an den Befestigungsvorrichtungen an der tragenden Struktur des Flugzeugs vorgenommen werden müssen. Zu diesem Zweck sind einerseits Befestigungsvorrichtungen an den Seitenwänden des Gepäckfachs vorgesehen, mit welchen bevorzugt eine Kraftaufnahme vorwiegend in y-Richtung (d.h. in Längsrichtung der Flügel) und in z-Richtung (d.h. in vertikaler Richtung) erzielt wird. Andererseits ist an der Unterseite der Rückseite zumindest eine weitere Befestigungsvorrichtung angeordnet, mit welcher bevorzugt eine Kraftaufnahme vorwiegend in y-Richtung und in x-Richtung (Flugrichtung) erzielt wird.

Die Befestigungsvorrichtungen können durch Teile, insbesondere Metallteile, mit zumindest einer Befestigungslasche gebildet sein, welche Teile, insbesondere Metallteile, mit der Seitenwand bzw. der Rückseite des feststehenden Teils verbunden, insbesondere verschraubt, vernietet oder verklebt, sind. Die Überkopf-Gepäckfächer werden über die Seitenwände und die Rückseite des feststehenden Teils an der tragenden Struktur des Flugzeuges zur Aufnahme von Kräften in Y- und Z-Richtung, d.h. in seitlicher und vertikaler Richtung gesehen in Flugrichtung des Flugzeuges, aufgehängt.

Zwischen dem feststehenden Teil und dem beweglichen Teil der Gepäckfächer sind vorzugsweise Elemente zur kombinierten Kraftunterstützung und Dämpfung der Bewegung des beweglichen Teils angeordnet. Diese Elemente bestehen bei den feststehenden Gepäckfächern aus entsprechenden Dämpfern, welche verhindern, dass die verschwenkbare Klappe beim Öffnen zu rasch aufschwingt. Bei absenkbaren Gepäckfächern erleichtern derartige Kraftunterstützungselemente und Dämpfungselemente einerseits das Öffnen unbeladener Mulden und dämpfen den Bewegungsverlauf beim Öffnen und unterstützen andererseits den Schließvorgang von beladenen Mulden, sodass auch weniger kräftigen Passagieren ein problemloses Schließen der Gepäckfächer ermöglicht wird.

Vorteilhafterweise ist der feststehende Teil und der bewegliche Teil der Überkopf-Gepäckablage aus Kunststoffverbundwerkstoff hergestellt. Dabei kommen hauptsächlich faserverstärkte Kunststoffe (GFK glasfaserverstärkte Kunststoffe und CFK Kohlenstoffaserverstärkte Kunststoffe) und leichte Wabenkörper zum Einsatz. Dadurch kann das Eigengewicht der Gepäckfächer besonders gering ausfallen, ohne dass deren Festigkeit und Stabilität beeinträchtigt wird.

Gemäß einem weiteren Merkmal der Erfindung ist an der in geschlossener Position des beweglichen Teils sichtbaren Seite des beweglichen Teils ein Handlauf angeordnet, der idealerweise aus einer in horizontaler Richtung verlaufenden Rinne gebildet ist. An diesen Rinnen können sich Passagiere während des Gehens entlang des Ganges des Flugzeugs mit den Fingern abstützen.

Beim fixen Gepäckfach ist der feststehende Teil im Wesentlichen in Form eines Quaders mit offener Vorderseite und der bewegliche Teil als Klappe ausgebildet, welche Klappe um eine an der Oberkante der offenen Vorderseite angeordnete Drehachse verschwenkbar ist. Zur Ermöglichung des Beladens des Gepäckfachs mit Handgepäck in aufrecht liegendem bzw. stehendem Zustand ist der Innenraum mindestens 61 cm tief und durchgehend mindestens 36 cm hoch und weist wie bereits oben erwähnt ein Volumen von mindestens 250 dm³ auf.

An der Oberseite des feststehenden Teils kann eine Lichtquelle angeordnet sein. Dies erleichtert einerseits die Montage der Leuchtmittel und ermöglicht andererseits eine Beleuchtung des Flugzeuginnenraums sowohl in geschlossener als auch geöffneter Position der Klappe des Überkopf-Gepäckfachs. Bei geschlossener Klappe des Gepäckfachs leuchtet das Licht gegen die sichtbare Seite des Deckenpaneels zur Verkleidung des Flugzeuginnenraums, und bietet somit eine angenehme indirekte Beleuchtung. Bei geöffneter Klappe des Überkopf-Gepäckfachs gelangt das Licht zwischen einem Spalt an die Unterseite der Klappe und wird von dort ins Innere des Gepäckfachs und in den Flugzeuginnenraum reflektiert. Die Position der Lichtquelle wird so gewählt, dass die Passagiere von keiner Stelle direkt bestrahlt bzw. geblendet werden.

Vorzugsweise ist die Unterseite des feststehenden Teils verstärkt ausgebildet, um einen Bruch der Gepäckablage bei Überbelastung oder Überbeanspruchung im Notfall verhindern zu können oder zumindest zu erschweren. Die verstärkte Ausbildung der Unterseite des feststehenden Teils des Gepäckfachs kann durch Anordnung zusätzlicher Lagen faserverstärktem Kunststoffs und allenfalls dazwischen angeordneter Wabenkörper oder auch einer Verstärkung mit anderen Materialien erfolgen.

Die Breite des Gepäckaufnahmeraums beträgt zumindest 100 cm, vorzugsweise 104,5 cm. Bei einer derartigen Breite des Gepäckfachs wird eine einfache Montage zwischen zwei Spanten des Flugzeugrumpfs, die üblicherweise in diesem Abstand angeordnet sind, ermöglicht. Unter der Voraussetzung einer entsprechend stabilen Ausführung des Überkopf-Gepäckfachs können auch noch größere Dimensionen, beispielsweise bis zu 2 m oder sogar darüber, erzielt werden und die Gepäckfächer über die Abstände von beispielsweise vier Spanten des Flugzeugrumpfs befestigt werden.

Beim absenkbaren oder verschwenkbaren Gepäckfach ist der feststehende Teil mit den Seitenwänden im Wesentlichen als quaderförmige Einhausung mit offener Unterseite und der bewegliche Teil als um die Drehachse verschwenkbare Mulde bzw. Schütte ausgebildet, wobei an der Rückseite der Mulde zumindest ein Krafteinleitungselement angeordnet ist, welches in geschlossener Position der Mulde eine Verbindung mit dem feststehenden Teil herstellt, sodass Kräfte von der Mulde über den feststehenden Teil in die tragenden Strukturen des Flugzeuges abgeleitet werden. Dadurch, dass in geschlossener Position des Gepäckfachs die Kräfte über das zumindest eine Krafteinleitungselement abgeleitet werden, ist es möglich, die Mulde relativ leicht auszubilden, wodurch das Gesamtgewicht des Überkopf-Gepäckfachs auch in dieser Bauweise bei gleichzeitig hohem Gepäckraumvolumen reduziert werden kann. Somit können auch absenkbare Gepäckfächer hergestellt werden, die relativ einfach und leicht aufgebaut sind.

Das zumindest eine Krafteinleitungselement ist gemäß einer Ausführungsvariante jeweils aus einem an der Rückseite der Mulde angeordneten Bolzen und einer an der Innenseite des feststehenden Teils angeordneten Aufnahme für den Bolzen gebildet. Alternativ ist der Bolzen an der Innenseite des feststehenden Teils und die Aufnahme für den Bolzen an der Rückseite der Mulde angeordnet. Der Bolzen und die Aufnahme für den Bolzen sind mit der Mulde bzw. dem feststehenden Teil des Gepäckfachs vorzugsweise verschraubt, vernietet oder verklebt. Der Bolzen und das Aufnahmeelement sind vorzugsweise aus Metall gebildet, können aber auch aus Kunststoff, beispielsweise im RTM (Resin Transfer Molding)-Verfahren, hergestellt sein.

Die Mulde besteht im Wesentlichen aus einem die Unterseite und die Rückseite bildenden Bodenelement mit Seitenborden. Die Seitenwände des beweglichen Elements, also der Mulde, können relativ niedrig als sogenannte Seitenborde ausgebildet werden. Es handelt sich bei der Mulde um eine sogenannte Halbschütte.

Vorzugsweise ist das Bodenelement der Mulde verstärkt ausgebildet. Hier kann ebenso wie bei der Unterseite des feststehenden-Teils bei den fixen Gepäckfächern ein Element aus mehreren Lagen an faserverstärktem Kunststoff mit dazwischen angeordneten Waben verwendet werden.

Die Drehachse, um welche der bewegliche Teil, also die Mulde, verschwenkbar ist, ist im hinteren Bereich der Seitenwände angeordnet. Dadurch wird eine optimale Balance zwischen möglichst leichtem Öffnen von unbeladenen Mulden und möglichst einfachem Schließen von beladenen Mulden erzielt. Der Bereich der Drehachse liegt jedenfalls hinter dem Schwerpunkt der Mulde des Gepäckfachs.

Das Verschlusselement kann über eine Welle mit an den Seitenwänden der Mulde angeordneten Schnappelementen verbunden sein, welche Schnappelemente in entsprechende mit dem feststehenden Teil verschraubte Verschlussgegenstücke einrastbar sind. Alternativ können die Schnappelemente mit dem feststehenden Teil verbunden sein, wobei die Verschlussgegenstücke an den Seitenwänden der Mulde angeordnet sind. Eine derartige Konstruktion bietet einen optimalen Halt der geschlossenen Mulde, da zumindest zwei Schnappelemente in die entsprechenden Verschlussgegenstücke seitlich einrasten und allenfalls zusätzlich in der Mitte eine Verriegelungseinrichtung angeordnet ist.

Wenn zumindest zwei Elemente zur kombinierten Kraftunterstützung und Dämpfung der Bewegung des beweglichen Teils angeordnet sind, und vor oder hinter der Drehachse mit jeder Seitenwand des feststehenden Teils verbunden sind, kann eine optimale Unterstützung des Öffnungsvorgangs einer leeren Mulde und eines Schließvorgangs einer beladenen Mulde erzielt werden. Durch die Kombination der Kraftunterstützung und Dämpfung in einem Element wird wenig Raum für diese Einrichtung benötigt, wodurch der Großteil des zur Verfügung stehenden Platzes für die Aufnahme von Gepäckstücken verwendet werden kann. Die kombinierten Dämpfungs- und Kraftunterstützungselemente bestehen insbesondere aus pneumatischen oder hydraulischen Federdämpfern.

Gelöst wird die zweite erfindungsgemäße Aufgabe durch ein oben genanntes Flugzeug mit einem Gang und beiderseits des Ganges angeordneten Überkopf-Gepäckfächern, welche wahlweise nach den beiden oben beschriebenen Varianten, also den fixen Gepäckfächern und den absenkbaren Gepäckfächern, ausgebildet sind.

Die Passagier-Serviceeinheiten sind zwischen den Überkopf-Gepäckfächern und der tragenden Struktur des Flugzeugs angeordnet und fluchten im Wesentlichen mit der unteren Ebene der Überkopf-Gepäckfächer. Durch die Anordnung der Passagier-Serviceeinheiten (PSU Passenger Service Unit) nicht unterhalb der Gepäckfächer sondern daneben zwischen der Außenwand bzw. Hülle des Flugzeugs und der Unterkante der Gepäckfächer ist das Umrüsten noch einfacher möglich. Auch kann die elektrische Versorgung und die Luftversorgung für die Sauerstoffmasken und die Belüftung des Fahrgastraums einfacher installiert werden.

Vorteilhafterweise ist die Drehachse des beweglichen Teils der Überkopf-Gepäckfächer in einem seitlichen Abstand von 81 bis 91 cm und einer Höhe von 177 bis 187 cm von der Bodenmitte des Ganges angeordnet. Somit wird ein Bereich von 10x10 cm geschaffen, in welchem die Anordnung der Drehachse des beweglichen Teils des absenkbaren Überkopf-Gepäckfachs für einen optimalen Bewegungsablauf der Mulde funktioniert.

Die im hinteren Bereich des Flugzeugs angeordneten Überkopf-Gepäckablagen sind entsprechend der Kontur des Flugzeugrumpfs kleiner ausgebildet, und die sichtbaren Vorderseiten der Überkopf-Gepäckfächer entlang einer Linie angeordnet. Dadurch wird ein ansprechendes Design des Flugzeuginnenraums geschaffen, wofür jedoch für den hinteren Bereich des Flugzeugs eigens angefertigte Gepäckfächer erforderlich sind, in welchen auch ein etwas geringerer Gepäckaufnahmeraum zur Verfügung steht.

Im vorderen Bereich des Flugzeugs sind vorzugsweise Überkopf-Gepäckfächer mit absenkbarer Mulde, wie oben beschrieben, und im hinteren Bereich des Flugzeugs feststehende Überkopf-Gepäckfächer mit nach oben verschwenkbarer Klappe angeordnet. Auf diese Weise können die erste Klasse oder Business-Klasse des Flugzeugs, die sich üblicherweise im vorderen Bereich befindet, mit bequemer belad- und entladbaren absenkbaren Gepäckfächern und die Economy Class mit fixen Gepäckfächern ausgestattet werden.

An der Oberseite des feststehenden Teils der Überkopf-Gepäckfächer können Verbindungselemente zur werkzeuglosen Befestigung von Abdeckpaneelen angeordnet sein. Aus diese Weise können Deckenpaneele, die zwischen den Überkopf-Gepäckfächern beiderseits eines Ganges angeordnet werden, rasch und werkzeuglos montiert werden. Durch die feste Anordnung der Verbindungselemente an den Überkopf-Gepäckfächern und der entsprechenden Gegenstücke an den Abdeckpaneelen werden auch lose Elemente, wie Schrauben oder dergl., verhindert.

Die Erfindung wird anhand von Figuren, welche Ausführungsbeispiele der Überkopf-Gepäckfächer zeigen, näher erläutert. Darin zeigen
Fig. 1 einen Querschnitt durch einen Teil eines Flugzeugrumpfs mit einem Gang mit Überkopf-Gepäckfächern mit feststehendem Behälter und verschwenkbarer Klappe;
Fig. 2 einen Querschnitt durch einen Teil eines Flugzeugrumpfs mit einem Gang mit Überkopf-Gepäckfächern mit absenkbarer Mulde;
Fig. 3 eine Seitenansicht durch ein feststehendes Überkopf-Gepäckfach mit verschwenkbarer Klappe gemäß Fig. 1 im Detail;
Fig. 4 eine Seitenansicht durch ein absenkbares Überkopf-Gepäckfach gemäß Fig. 2 im Detail;
Fig. 5 eine perspektivische Ansicht zweier fixer Überkopf-Gepäckfächer gemäß Fig. 1 und 3 mit geöffneter und geschlossener Klappe;
Fig. 6 eine perspektivische Ansicht zweier absenkbarer Überkopf-Gepäckfächer gemäß Fig. 2 und 4 in geöffneter und geschlossener Position;
Fig. 7 ein Detail der Aufhängung eines Überkopf-Gepäckfachs im Bereich der Rückseite des feststehenden Teils in Seitenansicht;
Fig. 8 ein Schnittbild durch einen Teil eines Flugzeugrumpfs im hinteren Bereich des Flugzeugs in Richtung der über dem Gang angeordneten Überkopf-Gepäckfächer;
Fig. 9 ein Detail des Verschlussmechanismus eines absenkbaren Überkopf-Gepäckfachs; und
Fig. 10 ein Detail eines Überkopf-Gepäckfachs mit absenkbarer Mulde gemäß Fig. 2, 4 und 6 im Bereich des Krafteinleitungselements.

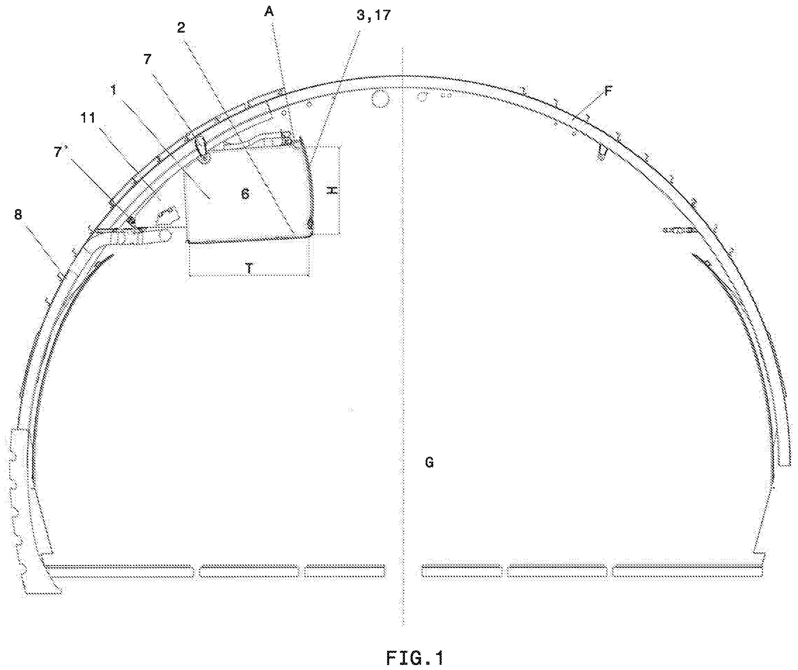

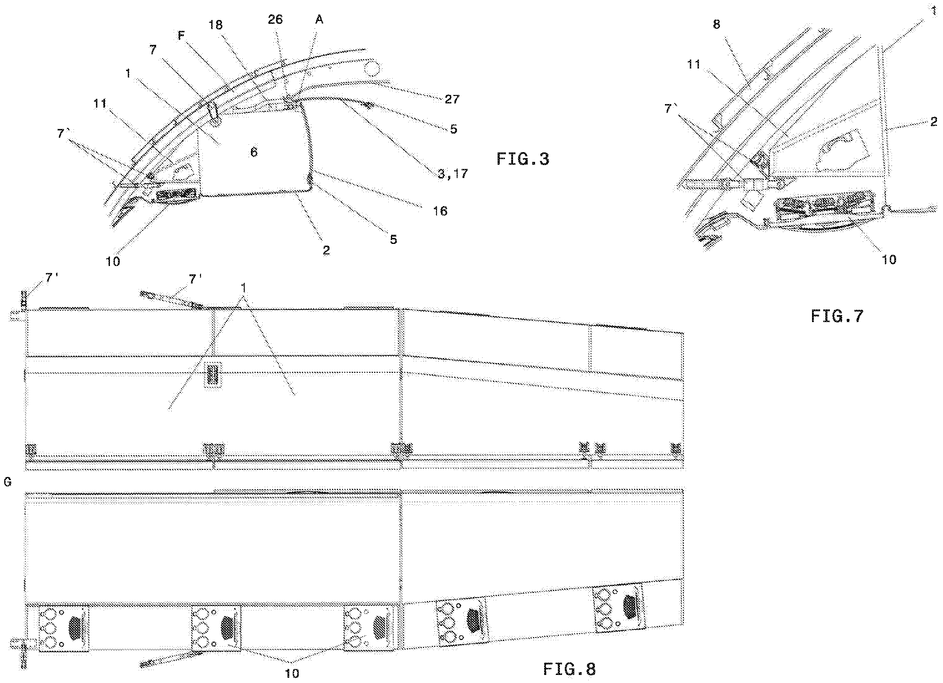

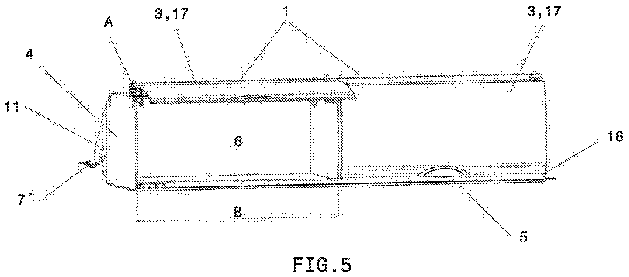

In Fig. 1 ist ein Teil eines Rumpfs eines Flugzeugs F mit einem Gang G und auf der linken Seite des Ganges G angeordneten Überkopf-Gepäckfächern 1 schematisch dargestellt. Üblicherweise sind auch auf der rechten Seite des Ganges G entsprechende Überkopf-Gepäckfächer 1 angeordnet, die hier aber der Einfachheit halber weggelassen wurden. Die Überkopf-Gepäckfächer 1 umfassen einen feststehenden Teil 2 mit Seitenwänden 4 (siehe Fig. 5) und einen beweglichen Teil 3, der um eine Drehachse A verschwenkbar ausgebildet ist. Im dargestellten Beispiel handelt es sich bei den Überkopf-Gepäckfächern 1 um sogenannte fixe oder feststehende Überkopf-Gepäckfächer 1, bei denen der feststehende Teil 2 im Wesentlichen in Form eines Quaders mit offener Vorderseite und der bewegliche Teil 3 als Klappe 17 ausgebildet ist. Die Klappe 17 ist um eine an der Oberkante der offenen Vorderseite des quaderförmigen feststehenden Teils 2 angeordnete Drehachse A verschwenkbar. Über entsprechende Befestigungsvorrichtungen 7, 7' wird das Überkopf-Gepäckfach 1 an der tragenden Struktur 8 des Flugzeugs F befestigt. Zur Aufnahme von Kräften in Y- und Z-Richtung, d.h. seitlich zur Fortbewegungsrichtung des Flugzeugs F und in vertikaler Richtung zur Fortbewegungsrichtung des Flugzeugs F, werden Befestigungsvorrichtungen 7 an den Seitenwänden 4 des feststehenden Teils 2 und der Rückseite 11 des feststehenden Teils 2 des Überkopf-Gepäckfachs angebracht. Die Befestigungsvorrichtungen 7 werden mit der Seitenwand 4 bzw. der Rückseite 11 des feststehenden Teils 2 verbunden, insbesondere verschraubt, vernietet oder verklebt. Über weitere Befestigungsvorrichtungen 7', welche im Bereich der Rückseite 11 des feststehenden Teils 2 des Überkopf-Gepäckfachs 1 angeordnet sind, werden Kräfte in Y-Richtung, d.h. in Flügelrichtung des Flugzeugs F, und in X-Richtung, d.h. in Fortbewegungsrichtung des Flugzeugs F, abgeleitet. Die Passagier-Serviceeinheiten 10, welche die Leselampen, Lüftungsöffnungen und Sauerstoffmasken für die Passagiere enthalten, befinden sich zwischen dem feststehenden Teil 2 des Überkopf-Gepäckfachs 1 und fluchten im Wesentlichen mit der Unterseite der Überkopf-Gepäckfächer 1. Die Passagier-Serviceeinheiten 10 sind über entsprechende Aufhängevorrichtungen 9 im Bereich der Rückseite 11 des feststehenden Teils 2 der Überkopf-Gepäckfächer 1 angeordnet. Dadurch, dass die Passagier-Serviceeinheiten 10 seitlich neben den Überkopf-Gepäckfächern 1 angeordnet sind, steht mehr Höhe H im Gepäckaufnahmeraum 6 des Überkopf-Gepäckfachs 1 für Gepäckstücke zur Verfügung, sodass ein Überkopf-Gepäckfach 1 mit einer durchgehenden Tiefe T von mindestens 61 cm und einer durchgehenden Höhe H von mindestens 36 cm erreicht werden kann. Somit ist es möglich, Gepäckstücke in einem hochkant liegenden bzw. stehenden Zustand im Überkopf-Gepäckfach 1 anzuordnen. Auf nähere Details der Überkopf-Gepäckfächer 1 wird noch in Fig. 3 und 5 hingewiesen.

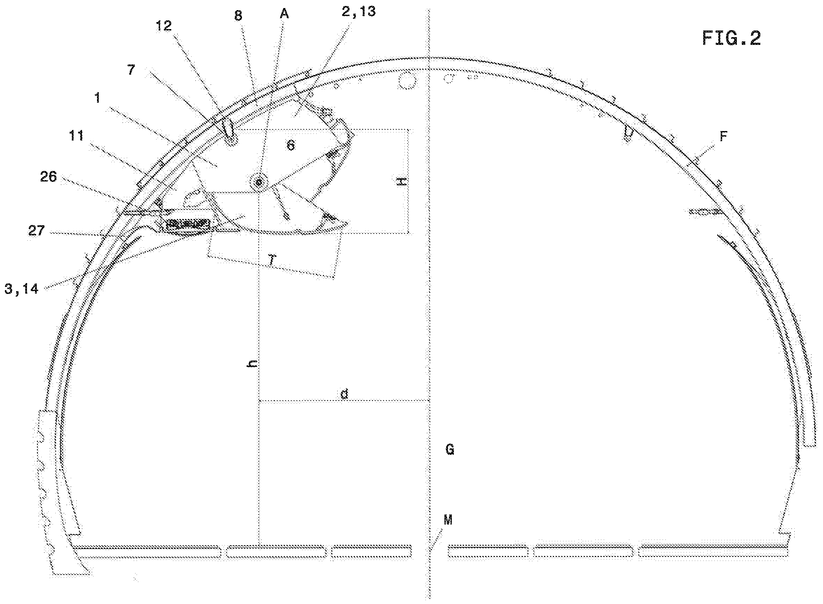

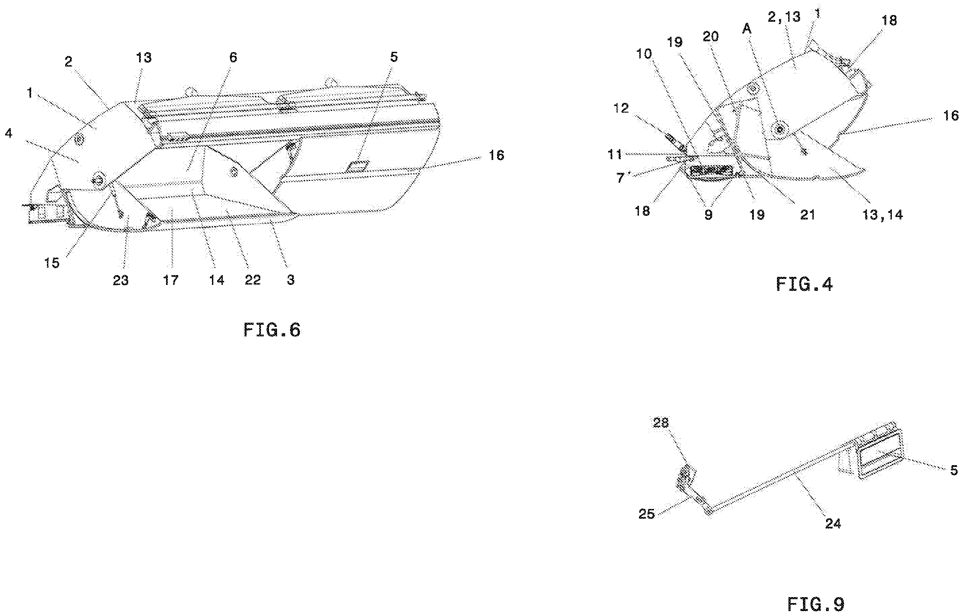

Fig. 2 zeigt einen Schnitt durch einen Teil eines Rumpfs eines Flugzeugs F mit darin angeordneten Überkopf-Gepäckfächern 1 einer anderen Bauform, nämlich mit absenkbarem beweglichen Teil 3, der als Mulde 14 ausgebildet ist. Dementsprechend ist der feststehende Teil 2 des Überkopf-Gepäckfachs 1 als im Wesentlichen quaderförmige Einhausung 13 mit offener Unterseite und der bewegliche Teil 3 als verschwenkbare Mulde 14 ausgebildet. Die Mulde 14 ist als sogenannte Halbschütte ausgebildet und besteht im Wesentlichen aus einem die Unterseite und die Rückseite bildenden Bodenelement 22 und Seitenborden 23. Die Mulde 14 ist um eine Drehachse A verschwenkbar zwischen einer geschlossenen und einer offenen Position angeordnet. Wie bei den Überkopf-Gepäckfächern 1 gemäß Fig. 1 wird der feststehende Teil 2 des Überkopf-Gepäckfachs 1 über entsprechende Befestigungsvorrichtungen 7, 7' an der tragenden Struktur 8 des Flugzeugs F aufgehängt. Wichtig dabei ist, dass die entsprechenden Befestigungsvorrichtungen 7, 7' sowohl beim Überkopf-Gepäckfach 1 gemäß Fig. 1 als auch beim Überkopf-Gepäckfach 1 gemäß Fig. 2 dieselben sind, sodass ein Umrüsten des Flugzeugs F leicht möglich wird. Die Passagier-Serviceeinheit 10 ist wiederum zwischen dem feststehenden Teil 2 des Überkopf-Gepäckfachs 1 und der Hülle des Flugzeugs F angeordnet. Auch das Überkopf-Gepäckfach 1 mit nach unten beweglicher Mulde 14 weist in geschlossener Position der Mulde 14 eine durchgehende Tiefe T von mindestens 61 cm und eine durchgehende Höhe H von mindestens 36 cm auf, sodass Gepäckstücke in einem hochkant liegenden bzw. stehenden Zustand angeordnet werden können. Für einen optimalen Bewegungsablauf des beweglichen Teils 3 bzw. der Mulde 14 zwischen der geschlossenen Position und der geöffneten Position ist die Drehachse A hinter dem Schwerpunkt des beweglichen Teils 3 angeordnet, vorzugsweise in einer Höhe h zwischen 177 und 187 cm von der Bodenmitte M des Ganges G des Flugzeugs F und einem seitlichen Abstand d von 81 bis 91 cm von der vertikalen Ebene durch die Bodenmitte M des Ganges G. Nähere Details zum absenkbaren Überkopf-Gepäckfach 1 gemäß Fig. 2 finden sich insbesondere in den Fig. 4 und 6. gemäß Fig. 2 finden sich insbesondere in den Fig. 4 und 6.

Fig. 3 zeigt eine Seitenansicht durch ein Überkopf-Gepäckfach 1 gemäß Fig. 1 in größerer Darstellung. Der feststehende Teil 2 des Überkopf-Gepäckfachs 1 ist im Wesentlichen in Form eines Quaders mit offener Vorderseite ausgebildet und weist einen als Klappe 17 ausgebildeten beweglichen Teil 3 auf. Die Klappe 17 ist um eine an der Oberkante der offenen Vorderseite angeordneten Drehachse A des feststehenden Teils 2 verschwenkbar angeordnet. An der Oberseite des feststehenden Teils 2 kann eine Lichtquelle 18 angeordnet sein, welche in der geschlossenen Position der Klappe 17 das Licht auf die Unterseite eines Abdeckpaneels 27 strahlt und in geöffneter Position der Klappe 17 das Licht durch einen Spalt auf die Unterseite der Klappe 17 strahlt, sodass sowohl Innenraum des Überkopf-Gepäckfachs 1 als auch Gang G des Flugzeugs F entsprechend beleuchtet wird. An der Klappe 17 ist ein Verschlusselement 5 angeordnet, welches die Klappe 17 in geschlossener Position hält und zum Öffnen entsprechend betätigt werden muss. Zur Kraftunterstützung sind entsprechende Elemente 15 zur kombinierten Kraftunterstützung und Dämpfung zwischen dem feststehenden Teil 2 und dem beweglichen Teil 3 des Überkopf-Gepäckfachs 1 angeordnet (nicht dargestellt). An der in geschlossener Position der Klappe 17 sichtbaren Seite des beweglichen Teils 3 bzw. der Klappe 17 kann ein Handlauf 16 in Form einer horizontal verlaufenden Vertiefung für die Finger der Passagiere angeordnet sein. An der Oberseite des feststehenden Teils 2 können weiters Verbindungselemente 26 zur werkzeuglosen Befestigung der Abdeckpaneele 27 angeordnet sein.

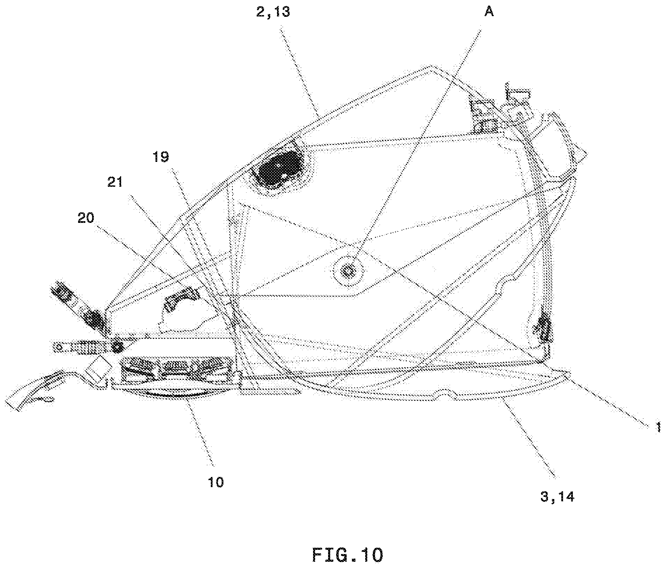

Fig. 4 zeigt ein Detail eines Überkopf-Gepäckfachs 1 mit absenkbarem beweglichen Teil 3, der als Mulde 14 ausgebildet ist, entsprechend Fig. 2. Hier ist der feststehende Teil 2 mit den Seitenwänden 4 (siehe Fig. 6) als im Wesentlichen quaderförmige Einhausung 13 mit offener Unterseite und der bewegliche Teil 3 als um die Drehachse A verschwenkbare Mulde 14 ausgebildet. An der Rückseite der Mulde 14 ist erfindungsgemäß ein Krafteinleitungselement 19 anordnet, welches in geschlossener Position der Mulde 14 eine Verbindung mit dem feststehenden Teil 2 herstellt, sodass Kräfte von der Mulde 14 über den feststehenden Teil 2 in die tragenden Strukturen 8 des Flugzeugs F abgeleitet werden können. Fig. 10 zeigt das Krafteinleitungselement 19 im Detail. Das Bodenelement 22 der Mulde 14 kann verstärkt ausgebildet sein, um den relativ hohen Kräften der Gepäckstücke standhalten zu können.

Fig. 5 zeigt eine perspektivische Ansicht zweier Überkopf-Gepäckfächer 1 entsprechend Fig. 1 und 3 mit geöffneter Klappe 17 beim linken Überkopf-Gepäckfach 1 und geschlossener Klappe 17 beim rechten Überkopf-Gepäckfach 1.

Fig. 6 zeigt zwei Überkopf-Gepäckfächer 1 mit absenkbarer Mulde 14 entsprechend Fig. 2 und 4, wobei die Mulde 14 beim linken Überkopf-Gepäckfach in geöffneter Position dargestellt ist, wohingegen die Mulde 14 beim rechten Überkopf-Gepäckfach in der geschlossenen Position dargestellt ist.
Fig. 7 zeigt ein Detail der Aufhängung der Passagier-Serviceeinheit 10 im Bereich der Rückseite 11 des feststehenden Teils 2 des Überkopf-Gepäckfachs 1. Dazu werden entsprechende Aufhängevorrichtungen 9 montiert, an welchen die Passagier-Serviceeinheit 10 entsprechend befestigt wird.

Fig. 8 zeigt eine Ansicht auf die Unterseite von Überkopf-Gepäckfächern 1 im hinteren Bereich des Rumpfs eines Flugzeugs F, wo die Hinterseite der Überkopf-Gepäckfächer 1 an den kleiner werdenden Querschnitt des Flugzeugrumpfs angepasst wird, wohingegen die sichtbaren Vorderseiten der Überkopf-Gepäckfächer 1 entlang einer Linie angeordnet sind, sodass der Gang G konstante Breite aufweist. Dadurch wird eine einheitliche Linie geschaffen, obgleich die Überkopf-Gepäckfächer 1 im hinteren Bereich konsequenterweise etwas geringeres Volumen aufweisen.

Fig. 9 zeigt ein Detail eines Verschlussmechanismus eines Überkopf-Gepäckfachs 1 mit absenkbarer Mulde 14 gemäß den Fig. 2, 4 und 6. Das Verschlusselement 5 ist über eine Welle 24 mit an den Seitenborden 23 der Mulde 14 angeordneten Schnappelementen 25 verbunden, welche Schnappelemente 25 in entsprechende mit den Seitenwänden 4 des feststehenden Teils 2 verschraubten Verschlussgegenstücken 28 einrastbar sind. Der Verschlussmechanismus ist nur für eine Seite dargestellt; üblicherweise befindet sich auch auf der anderen Seite des Verschlusselements 5 ein entsprechend spiegelsymmetrisch angeordneter Mechanismus. Die Welle 24 kann aus kohlenstofffaserverstärktem Kunststoff gebildet sein.

Schließlich zeigt Fig. 10 ein Detail eines Überkopf-Gepäckfachs 1 mit absenkbarer Mulde 14 gemäß den Fig. 2, 4 und 6 im Bereich des Krafteinleitungselements 19, das beispielsweise als Bolzen 20 ausgebildet ist und mit der Rückseite der Mulde 14 verbunden, vorzugsweise verschraubt, vernietet oder verklebt, ist. Als Gegenstück ist eine Aufnahme 21 für den Bolzen 20 an der Innenseite des feststehenden Teils 2 bzw. der Einhausung 13 anordnet. Im geschlossenen Zustand der Mulde 14 wird der Bolzen 20 von der Aufnahme 21 aufgenommen und es können somit Kräfte vom Inneren der Mulde 14 über den Bolzen 20 in die Aufnahme 21 und weiter in den feststehenden Teil 2 bzw. die Einhausung 13 des Überkopf-Gepäckfachs 1 übertragen und über die Befestigungsvorrichtungen 7, 7' in die tragende Struktur 8 des Flugzeugs F abgeleitet werden. Auf diese Weise kann die Mulde 14 relativ leicht aufgebaut werden, da im geschlossenen Zustand der Mulde 14 die Kräfte über das Krafteinleitungselement 19 abgeleitet werden.

## Patentansprüche

1. Überkopf-Gepäckfächer (1) für Flugzeuge (F) mit einem fixen Gepäckfach mit einem feststehenden Gehäuse und einer verschwenkbaren Klappe (17) und einem absenkbaren Gepäckfach mit einer absenkbaren Mulde (14), wobei das fixe Gepäckfach und das absenkbare Gepäckfach jeweils einen feststehenden Teil (2) mit Seitenwänden (4) und einem um eine Drehachse (A) zwischen einer geschlossenen und einer geöffneten Position verschwenkbaren beweglichen Teil (3) mit einem Verschlusselement (5) zum Halten des beweglichen Teils (3) in der geschlossenen Position aufweisen, welche einen Gepäckaufnahmeraum (6) definieren, wobei am feststehenden Teil (2) Befestigungsvorrichtungen (7, 7') zur Befestigung an einer tragenden Struktur (8) des Flugzeugs (F) und zumindest eine Aufhängevorrichtung (9) für eine Passagier-Serviceeinheit (10) angeordnet ist, und wobei die Aufhängevorrichtung (9) für die Passagier-Serviceeinheit (10) im Bereich der Rückseite (11) des feststehenden Teils (2) angeordnet ist, so dass die Passagier-Serviceeinheit (10) zwischen dem Gepäckfach (1) und der Hülle des Flugzeugs (F) anordenbar ist, **dadurch gekennzeichnet, dass** zwei Befestigungsvorrichtungen (7) an den Seitenwänden (4) des feststehenden Teils (2) zur Aufnahme von Kräften in seitlicher und vertikaler Richtung zur Fortbewegungsrichtung des Flugzeugs (F) und zumindest eine weitere Befestigungsvorrichtung (7') im Bereich der Unterseite der Rückseite (11) des feststehenden Teils (2) zur Aufnahme von Kräften in seitlicher Richtung zur Fortbewegungsrichtung des Flugzeugs (F) und in Fortbewegungsrichtung des Flugzeugs (F) angeordnet sind, wobei die Befestigungsvorrichtungen (7) und die weitere Befestigungsvorrichtung (7') für das fixe Gepäckfach und das absenkbare Gepäckfach zur Anordnung an den selben Aufhänge- bzw. Befestigungspunkten der tragenden Struktur (8) ausgebildet sind, und dass der Gepäckaufnahmeraum (6) in geschlossener Position des beweglichen Teils (3) eine durchgehende Tiefe (T) von mindestens 61 cm und eine durchgehende Höhe (H) von mindestens 36 cm und ein Volumen von mindestens 250 dm³ aufweist, sodass Gepäckstücke in einem hochkant liegenden Zustand angeordnet werden können.

2. Überkopf-Gepäckfächer (1) nach Anspruch 1, **dadurch gekennzeichnet, dass** die Befestigungsvorrichtungen (7, 7') durch Teile, insbesondere Metallteile, mit zumindest einer Befestigungslasche (12) gebildet sind, welche Teile, insbesondere Metallteile, mit der Seitenwand (4) bzw. der Rückseite (11) des feststehenden Teils (2) verbunden, insbesondere verschraubt oder verklebt, sind.

3. Überkopf-Gepäckfächer (1) nach Anspruch 1 oder 2, **dadurch gekennzeichnet, dass** zwischen dem feststehenden Teil (2) und dem beweglichen Teil (3) Elemente (15) zur kombinierten Kraftunterstützung und Dämpfung der Bewegung des beweglichen Teils (3) angeordnet sind.

4. Überkopf-Gepäckfächer (1) nach einem der Ansprüche 1 bis 3, **dadurch gekennzeichnet, dass** der feststehende Teil (2) und der bewegliche Teil (3) aus Kunststoffverbundwerkstoff hergestellt ist.

5. Überkopf-Gepäckfächer (1) nach einem der Ansprüche 1 bis 4, **dadurch gekennzeichnet, dass** beim fixen Gepäckfach der feststehende Teil (2) im Wesentlichen in Form eines Quaders mit offener Vorderseite und dass der bewegliche Teil (3) als Klappe (17) ausgebildet ist, welche Klappe (17) um eine an der Oberkante der offenen Vorderseite angeordnete Drehachse (A) verschwenkbar ist.

6. Überkopf-Gepäckfächer (1) nach Anspruch 5, **dadurch gekennzeichnet, dass** die Unterseite des feststehenden Teils (2) verstärkt ausgebildet ist.

7. Überkopf-Gepäckfächer (1) nach Anspruch 5 oder 6, **dadurch gekennzeichnet, dass** die Breite (B) des Gepäckaufnahmeraums (6) zumindest 100 cm, vorzugsweise 104,5 cm, beträgt.

8. Überkopf-Gepäckfächer (1) nach einem der Ansprüche 1 bis 7, **dadurch gekennzeichnet, dass** beim absenkbaren Gepäckfach der feststehende Teil (2) mit den Seitenwänden (4) als quaderförmige Einhausung (13) mit offener Unterseite und der bewegliche Teil (3) als um die Drehachse (A) verschwenkbare Mulde (14) ausgebildet ist, wobei an der Rückseite der Mulde (14) zumindest ein Krafteinleitungselement (19) angeordnet ist, welches in geschlossener Position der Mulde (14) eine Verbindung mit dem feststehenden Teil (2) herstellt, sodass Kräfte von der Mulde (14) über den feststehenden Teil (2) in die tragenden Strukturen (8) des Flugzeuges (F) abgeleitet werden, wobei das zumindest eine Krafteinleitungselement (19) vorzugsweise jeweils aus einem an der Rückseite der Mulde (14) angeordneten Bolzen (20) und einer an der Innenseite des feststehenden Teils (2) angeordneten Aufnahme (21) für den Bolzen (20) gebildet ist.

9. Überkopf-Gepäckfächer (1) nach Anspruch 8, **dadurch gekennzeichnet, dass** die Mulde (14) im Wesentlichen aus einem die Unterseite und die Rückseite bildenden Bodenelement (22) mit Seitenborden (23) besteht.

10. Überkopf-Gepäckfächer (1) nach Anspruch 8 oder 9, **dadurch gekennzeichnet, dass** die Drehachse (A) im hinteren Bereich der Seitenwände (4) angeordnet ist

11. Überkopf-Gepäckfächer (1) nach einem der Ansprüche 8 bis 10, **dadurch gekennzeichnet, dass** das Verschlusselement (5) über eine Welle (24) mit an den Seitenborden (23) der Mulde (14) angeordneten Schnappelementen (25) verbunden ist, welche Schnappelemente (25) in entsprechende mit dem feststehenden Teil (2) verschraubte Verschlussgegenstücke (28) einrastbar sind.

12. Überkopf-Gepäckfach (1) nach einem der Ansprüche 8 bis 11, **dadurch gekennzeichnet, dass** zumindest zwei Elemente (15) zur kombinierten Kraftunterstützung und Dämpfung der Bewegung des beweglichen Teils (3) angeordnet sind, und vor oder hinter der Drehachse (A) mit jeder Seitenwand (4) des feststehenden Teils (2) verbunden sind.

13. Flugzeug (F) mit einem Gang (G) und beiderseits des Ganges (G) angeordneten Überkopf-Gepäckfächern (1), welche wahlweise nach einem der Ansprüche 5 bis 7 oder nach einem der Ansprüche 8 bis 12 ausgebildet sind, wobei vorzugsweise im vorderen Bereich des Flugzeugs (F) Überkopf-Gepäckfächer (1) nach den Ansprüchen 8 bis 12 und im hinteren Bereich des Flugzeugs (F) Überkopf-Gepäckfächer (1) nach den Ansprüchen 5 bis 7 angeordnet sind.

14. Flugzeug (F) nach Anspruch 13, **dadurch gekennzeichnet, dass** die Passagier-Serviceeinheiten (10) zwischen den Überkopf-Gepäckfächern (1) und der tragenden Struktur (8) angeordnet sind und im Wesentlichen mit der unteren Ebene der Überkopf-Gepäckfächer (1) fluchten.

15. Flugzeug (F) nach Anspruch 13 oder 14, **dadurch gekennzeichnet, dass** die Drehachse (A) des beweglichen Teils (3) der Überkopf-Gepäckfächer (1) nach einem der Ansprüche 8 bis 12 in einem seitlichen Abstand (d) von 81 bis 91 cm und einer Höhe (h) von 177 bis 187 cm von der Bodenmitte (M) des Ganges (G) angeordnet ist.

## Claims

1. Overhead luggage bins (1) for aeroplanes (F), having a fixed bin with a stationary housing and a pivotable flap (17) and a movable bin with a lowerable tray (14), wherein the fixed bin and the moveable bin each include a stationary part (2) having side walls (4) and a movable part (3) which is pivotable between a closed and an open position around a rotation axis (A), having a closure element (5) for retaining the movable part (3) in the closed position, said parts defining a luggage-receiving space (6), wherein fastening devices (7, 7') for fastening to a supporting structure (8) of the aeroplane (F) are arranged on the stationary part (2), and at least one suspension device (9) for a passenger service unit (10) is arranged, and wherein the suspension device (9) for the passenger service unit (10) is arranged in the region of the rear side (11) of the stationary part (2), so the passenger service unit (10) may be arranged between the bin (1) and the hull of the aeroplane (F), **characterised in that** two fastening devices (7) for absorbing forces in the sideways and vertical directions to the direction of advancement of the aeroplane (F) are arranged on the side walls (4) of the stationary part (2) and at least one further fastening device (7') for absorbing forces in the sideways direction to the direction of advancement of the aeroplane (F) and in the direction of advancement of the aeroplane (F) is arranged in the region of the lower side of the rear side (11) of the stationary part (2), said fastening devices (7) and said further fastening device (7') for the fixed bin and the movable bin being designed to be arranged at the same suspension and/or fastening locations on the supporting structure (8), and **in that** the luggage-receiving space (6), in the closed position of the movable part (3), has an end-to-end depth (T) of at least 61 cm and an end-to-end height (H) of at least 36 cm and a volume of at least 250 dm³, so pieces of luggage can be placed in an endwise horizontal position.

2. The overhead luggage bins (1) according to claim 1, **characterised in that** the fastening devices (7, 7') are formed by parts, in particular metal parts, having at least one fastening tab (12), which parts, in particular metal parts, are connected to the side wall (4) and/or rear side (11) of the stationary part (2), in particular screwed or glued.

3. The overhead luggage bins (1) according to claim 1 or 2, **characterised in that** elements (15) for combined force support and damping of the movement of the movable part (3) are arranged between the stationary part (2) and the movable part (3).

4. The overhead luggage bins (1) according to any one of claims 1 to 3, **characterised in that** the stationary part (2) and the movable part (3) are made of a plastic composite material.

5. The overhead luggage bins (1) according to any one of claims 1 to 4, **characterised in that** in the fixed bin the stationary part (2) is substantially designed in the shape of a cuboid having an open front side and **in that** the movable part (3) is designed as a flap (17), which flap (17) is pivotable around a rotation axis (A) arranged on the top edge of the open front side.

6. The overhead luggage bins (1) according to claim 5, **characterised in that** the lower side of the stationary part (2) is designed reinforced.

7. The overhead luggage bins (1) according to claim 5 or 6, **characterised in that** the width (B) of the luggage-receiving space (6) is at least 100 cm, preferably 104.5 cm.

8. The overhead luggage bins (1) according to any one of claims 1 to 7, **characterised in that** in the movable bin the stationary part (2) having the side walls (4) is designed as a cuboid-shaped enclosure (13) having an open lower side and the movable part (3) is designed as a tray (14) which is pivotable around the rotation axis (A), wherein at least one force transmission element (19) is arranged on the rear side of the tray (14), establishing a connection to the stationary part (2) in the closed position of the tray (14), so forces may be discharged from the tray (14) via the stationary part (2) into the supporting structures (8) of the aeroplane (F), wherein the at least one force transmission element (19) is preferably formed by a bolt (20) arranged on the rear side of the tray (14) and a reception (21) for the bolt (20) arranged on the inside of the stationary part (2).

9. The overhead luggage bins (1) according to claim 8, **characterised in that** the tray (14) is substantially composed of a bottom element (22) forming the lower side and the rear side, and side boards (23).

10. The overhead luggage bins (1) according to claim 8 or 9, **characterised in that** the rotation axis (A) is arranged in the rear part of the side walls (4).

11. The overhead luggage bins (1) according to any one of claims 8 to 10, **characterised in that** the closure element (5) is connected to snapping elements (25) arranged on the side boards (23) of the tray (14) via a shaft (24), which snapping elements (25) may be snapped into corresponding closure counterparts (28) screwed to the stationary part (2).

12. The overhead luggage bins (1) according to any one of claims 8 to 11, **characterised in that** at least two elements (15) for combined force support and damping of the movement of the movable part (3) are arranged and connected to each side wall (4) of the stationary part (2) in front of or behind the rotation axis (A).

13. An aeroplane (F) having one aisle (G) and overhead luggage bins (1) arranged on both sides of the aisle (G), which are optionally designed according to any one of claims 5 to 7 or according to any one of claims 8 to 12, wherein preferably overhead luggage bins (1) according to claims 8 to 12 are arranged in the front of the aeroplane (F) and overhead luggage bins (1) according to claims 5 to 7 are arranged in the rear of the aeroplane (F).

14. The aeroplane (F) according to claim 13, **characterised in that** the passenger service units (10) are arranged between the overhead luggage bins (1) and the supporting structure (8) and are substantially flush with the lower plane of the overhead luggage bins (1).

15. The aeroplane (F) according to claim 13 or 14, **characterised in that** the rotation axis (A) of the movable part (3) of the overhead luggage bins (1) according to any one of claims 8 to 12 is arranged at a lateral distance (d) of 81 to 91 cm and at a height (h) of 177 to 187 cm from the centre (M) of the floor of the aisle (G).

## Revendications

1. Compartiment à bagages en hauteur (1) pour avions (F) avec un compartiment à bagages fixe avec un boîtier fixe et un clapet pivotant (17) et un compartiment à bagages abaissable avec une cavité abaissable (14), le compartiment à bagages fixe et le compartiment à bagages abaissable comprenant chacun une partie fixe (2) avec des parois latérales (4) et une partie mobile (3), pivotant autour d'un axe de rotation (A) entre une position fermée et une position ouverte, avec un élément de verrouillage (5) pour le maintien de la partie mobile (3) dans la position fermée, qui définissent un espace de logement de bagages (6), moyennant quoi, sur la partie fixe (2) sont prévus des dispositifs de fixation (7, 7') pour la fixation à une structure porteuse (8) de l'avion (F) et au moins un dispositif d'accrochage (9) pour une unité de service de passagers (10) et le dispositif d'accrochage (9) pour l'unité de service de passagers (10) est disposé au niveau de l'arrière (11) de la partie fixe (2), de façon à ce que l'unité de service de passagers (10) puisse être disposé entre le compartiment à bagages (1) et le fuselage de l'avion (F), **caractérisé en ce que** deux dispositifs de fixation (7) sont disposés sur les parois latérales (4) de la partie fixe (2) pour l'absorption de forces dans les directions latérale et verticale par rapport à la direction de déplacement de l'avion (F) et au moins un dispositif de fixation supplémentaire (7') est disposé au niveau du côté inférieur de l'arrière (11) de la partie fixe (2) pour l'absorption de forces dans la direction latérale par rapport à la direction de déplacement de l'avion (F) et dans la direction de déplacement de l'avion (F), les dispositifs de fixation (7) et le dispositif de fixation supplémentaire (7') étant conçus pour le compartiment à bagages fixe et le compartiment à bagages abaissable pour la disposition au niveau des mêmes points d'accrochage ou de fixation de la structure porteuse (8) et **en ce que** l'espace de logement de bagages (6) présente, dans la position fermée de la partie mobile (3), une profondeur continue (T) d'au moins 61 cm et une hauteur continue (H) d'au moins 36 cm et un volume d'au moins 250 dm³, de façon à ce que des bagages puissent être disposés verticalement.

2. Compartiment à bagages en hauteur (1) selon la revendication 1, **caractérisé en ce que** les dispositifs de fixation (7, 7') sont constitués de pièces, plus particulièrement de pièces métalliques, avec au moins une patte de fixation (12), ces pièces, plus particulièrement ces pièces métalliques étant reliées avec la paroi latérale (4) ou l'arrière (11) de la partie fixe (2), plus particulièrement vissées ou collées.

3. Compartiment à bagages en hauteur (1) selon la revendication 1 ou 2, **caractérisé en ce que**, entre la partie fixe (2) et la partie mobile (3), se trouvent des éléments (15) pour l'assistance et l'amortissement combinés du mouvement de la partie mobile (3).

4. Compartiment à bagages en hauteur (1) selon l'une des revendications 1 à 3, **caractérisé en ce que** la partie fixe (2) et la partie mobile (3) sont constituées d'une matière plastique composite.

5. Compartiment à bagages en hauteur (1) selon l'une des revendications 1 à 4, **caractérisé en ce que**, dans le compartiment à bagages fixe, la partie fixe (2) présente globalement la forme d'un parallélépipède avec un côté avant ouvert et **en ce que** la partie mobile (3) est conçue comme un clapet (17), ce clapet (17) pouvant pivoter autour d'un axe de rotation (A) disposé au niveau de l'arête supérieure du côté avant ouvert.

6. Compartiment à bagages en hauteur (1) selon la revendication 5, **caractérisé en ce que** le côté inférieur de la partie fixe (2) est renforcé.

7. Compartiment à bagages en hauteur (1) selon la revendication 5 ou 6, **caractérisé en ce que** la largeur (B) de l'espace de logement de bagages (6) est d'au moins 100 cm, de préférence de 104,5 cm.

8. Compartiment à bagages en hauteur (1) selon l'une des revendications 1 à 7, **caractérisé en ce que**, dans le compartiment à bagages abaissable, la partie fixe (2) avec les parois latérales (4) est conçue comme un boîtier (13) parallélépipédique avec un côté inférieur ouvert et la partie mobile (3) est conçue comme une cavité (14) pivotant autour de l'axe de rotation (A), au moins un élément de transmission de force (19) étant disposé à l'arrière de la cavité (14), qui établit, dans la position fermée de la cavité (14), une liaison avec la partie fixe (2), de façon à ce que les forces soient dérivées de la cavité (14) vers les structures porteuses (8) de l'avion (F) en passant par la partie fixe (2), l'au moins un élément de transmission de force (19) étant constitué de préférence d'un boulon (20) disposé à l'arrière de la cavité (14) et d'un logement (21) pour le boulon (20) disposé à l'intérieur de la partie fixe (2).

9. Compartiment à bagages en hauteur (1) selon la revendication 8, **caractérisé en ce que** la cavité (14) est constituée essentiellement d'un élément de fond (22) avec des bords latéraux (23), formant le côté inférieur et l'arrière.

10. Compartiment à bagages en hauteur (1) selon la revendication 8 ou 9, **caractérisé en ce que** l'axe (A) est disposé dans la partie arrière des parois latérales (4).

11. Compartiment à bagages en hauteur (1) selon l'une des revendications 8 à 10, **caractérisé en ce que** l'élément de verrouillage (5) est relié par l'intermédiaire d'un arbre (24) avec des éléments d'encliquetage (25) disposés au niveau des bords latéraux (23) de la cavité (14), ces éléments d'encliquetage (25) pouvant être encliquetés dans des contre-pièces de verrouillage (28) correspondantes vissées avec la partie fixe (2).

12. Compartiment à bagages en hauteur (1) selon l'une des revendications 8 à 11, **caractérisé en ce qu'**au moins deux éléments (15) sont prévus pour l'assistance et l'amortissement combinés du déplacement de la partie mobile (3) et sont reliés devant et derrière l'axe de rotation (A) avec chaque paroi latérale (4) de la partie fixe (2).

13. Avion (F) avec un couloir (G) et des compartiments à bagages en hauteur (1) disposés des deux côtés du couloir (G), qui sont conçus au choix selon l'une des revendications 5 à 7 ou selon l'une des revendications 8 à 12, des compartiments à bagages en hauteur (1) selon les revendications 8 à 12 étant disposés de préférence dans la partie avant de l'avion (F) et des compartiments à bagages en hauteur (1) selon les revendications 5 à 7 étant disposés dans la partie arrière de l'avion (F).

14. Avion (F) selon la revendication 13, **caractérisé en ce que** les unités de service de passagers (10) sont disposées entre les compartiments à bagages en hauteur (1) et la structure porteuse (8) et sont globalement alignées avec le plan inférieur des compartiments à bagages en hauteur (1).

15. Avion (F) selon la revendication 13 ou 14, **caractérisé en ce que** l'axe de rotation (A) de la partie mobile (3) des compartiments à bagages en hauteur (1) selon l'une des revendications 8 à 12 est disposé à une distance latérale (d) de 81 à 91 cm et à une hauteur (h) de 177 à 187 cm du centre du plancher (M) du couloir (G).
